# EUROPÄISCHE PATENTSCHRIFT

(11) **EP 2 311 634 B1**
(45) Veröffentlichungstag und Bekanntmachung des Hinweises auf die Patenterteilung: **10.04.2013**
(21) Anmeldenummer: 10012047.6
(22) Anmeldetag: 20.02.2006
(51) Int. Cl.: B32B 37/12, B32B 37/15, B32B 15/08, B32B 15/12, B65D 41/00, B65B 7/00, B60R 13/00, B32B 38/14

(54) **Verfahren zur Kaschierung flächiger Trägermaterialien auf Metallsubstraten**
METHOD FOR LAMINATING FLAT SUPPORT MATERIALS ON METALLIC SUBSTRATES
PROCEDE POUR LAMINER DES MATERIAUX SUPPORTS PLATS SUR DES SUBSTRATS MÉTALLIQUES

(30) Priorität: 01.04.2005 DE 102005015340
(43) Veröffentlichungstag der Anmeldung: 20.04.2011
(62) Teilanmeldung aus: 06707079.7
(73) Patentinhaber: Jowat AG, 32758 Detmold (DE)
(72) Erfinder: Terfloth, Christian, Dr., 32760 Detmold (DE); Starck, Felix, Dr., 32760 Detmold (DE)
(74) Vertreter: Von Rohr

(56) Entgegenhaltungen:
- EP-A2- 1 304 217
- WO-A1-03/084742
- DE-A1- 3 929 942
- US-A- 4 407 689
- US-A- 5 865 931
- US-A1- 2002 157 777

## Beschreibung

Die vorliegende Erfindung betrifft ein Verfahren zur Kaschierung von Kunststoffolien auf Metallsubstraten.

Für die Beschichtung von Metallsubstraten, insbesondere plattenförmigen Metallsubstraten, wie Metalltafeln oder Metallblechen, mit einem diese Substrate optisch und/oder haptisch, ein- oder beidseitig verändernden Bedruckungs- oder Beschichtungsmaterial sind unterschiedliche Verfahren bekannt.

So werden beispielsweise im Bereich der Herstellung von lackierten oder bedruckten Metalltafeln oder Metallblechen Lacke und Druckfarben eingesetzt, welche UV-reaktiv oder lösemittelhaltig sind. Insbesondere Produzenten von z. B. Metallverpackungen oder Schraubverschlüssen für Gläser und Flaschen, Kronenkorken, technischen Dosen, Lebensmittel- oder Aerosoldosen und dergleichen sowie Produzenten einer Vielzahl anderer aus lackiertem und bedrucktem Metall hergestellten Erzeugnisse (z. B. Spielwaren, Zierleisten) sind verstärkt mit Themen und Problemen vor allem in den Bereichen umweltbedingter Lösemittel und Lebensmittelverträglichkeit konfrontiert.

Überwiegend werden farbig und/oder bedruckte Metallerzeugnisse gemäß dem heutigen Stand der Technik mit extrem hohen energetischen und investiven Aufwendungen sowie mit hohen umweltseitigen Risiken hergestellt:
In einem ersten Arbeitsgang wird eine Seite der Metalltafel mit einem Grundlack für die spätere Bedruckung lackiert, wobei die Trocknung bei Lösemittellacken thermisch mittels technisch sehr aufwendiger, großvolumiger und hochinvestiver Trockenöfen bei nahezu senkrecht stehend transportierten Metalltafeln erfolgt. Gleichermaßen erfolgt in einem separaten zweiten, jedoch gleichartig aufwendigen Arbeitsgang die sogenannte Schutzlackierung der anderen Tafelseite. In einem wiederum separaten dritten, gleichartig aufwendigen Arbeitsgang erfolgt dann die einseitige Bedruckung der Metalltafeln mit anschließender wiederum aufwendiger thermischer Trocknung. Eine Schutz- oder Hochglanzlackierung auf der Druckfarbe vollzieht sich in einem weiteren, separaten vierten Arbeitsgang mit vergleichsweise hohem Aufwand wie bei der Grundlackierung.

Bei der Verwendung von UV-reaktiven Lacken und Farben sind gleichartige Produktionsschritte erforderlich, wobei lediglich die Trocknung dieser Lacke und Druckfarben nicht thermisch, sondern mittels ebenfalls energetisch sehr aufwendiger und hochinvestiver UV-Bestrahlung der Metalltafeln erfolgt.

Insbesondere bei der Verarbeitung von lösemittelhaltigen Lacken und Druckfarben sind die Emissionen flüchtiger organischer Verbindungen ein zunehmend großes Problem für die Metallbeschichtung. Zudem bedingen die heutige eingesetzten Lackier- und Druckverfahren extrem hohe Kosten für Investitionen, Platz, Energie und Bedienung sowie die Einhaltung der zunehmend produktionsbeschränkenden Emissionsgesetzgebungen.

Produzenten von beschichteten und/oder bedruckten Metallprodukten verarbeiten überwiegend Metalltafeln gemäß den vorstehend beschriebenen Verfahren in Stärken bzw. Dicken von 0,05 bis 1,0 mm und in vielerlei Abmessungen von im allgemeinen mindestens 200 x 200 mm - je nach den daraus herzustellenden Endprodukten. Die Endproduktherstellung erfolgt beispielsweise mittels Ausstanzen von Zuschnitten aus einer beschichteten und/oder bedruckten Metalltafel sowie der anschließend endproduktgemäßen Formgebung dieser Zuschnitte.

Des weiteren sind aus dem Stand der Technik verschiedene Verfahren zur Laminierung von Metalloberflächen bekannt.

So ist aus der DE 100 04 593 C1 ein spezielles Verfahren zur Herstellung von Platinen für Kraftfahrzeug-Nummernschilder bekannt, wobei ein zugeführtes Blechband mit bedruckter Folie kaschiert wird, indem die auf Untermaß bedruckte Folie vor und/oder während des Aufkaschierens auf einen steuerbaren Kaschierabstand gedehnt wird. Das dort beschriebene Verfahren eignet sich nur für die spezielle Problemstellung der Herstellung von Platinen für Kraftfahrzeug-Nummernschilder, ist aber nicht allgemein für die Kaschierung beliebiger Trägermaterialien auf beliebiger Substraten geeignet und somit nicht universell einsetzbar.

Die DE 44 20 532 A1 beschreibt ein Verfahren zum Herstellen einer Metalldose, eine Vorrichtung zur Durchführung dieses Verfahrens sowie die nach diesen Verfahren hergestellte Metalldose. Bei dem in der DE 44 20 532 A1 beschriebenen Verfahren wird ein aus einer speziellen Kunststoffolie hergestellter Kunststoffolienzuschnitt auf einen fertigen Dosenkörper aufkaschiert. Dies ist relativ aufwendig und anwendungsbezogen nur wenig flexibel.

Die DE 692 19 041 T2 beschreibt eine Vorrichtung zum Kaschieren von Dosenrohlingen, wobei unter Bezugnahme auf die JP 63203324 A auf das Aufkleben von thermoplastischen Folien auf ein Metallband hingewiesen wird,

Auch sind aus dem Stand der Technik ferner Kunststoffmaterialien, insbesondere Folien verschiedenster Art bekannt, welche hitzeklebrig ausgebildet sind und auf diese Weise für die Aufkaschierung vorzugsweise auf Metallbändern geeignet sind. So beschreibt die DE 101 30 005 A1 ein Verfahren zur Beschichtung der Oberfläche eines Metallbandes mit einem Kunststoffilm, wobei ein spezieller Kunststoffilm mit hitzeklebrigen Eigenschaften dadurch auf das Metallband aufkaschiert wird, daß das Metallband auf eine bestimmte, die Schmelztemperatur des aufzukaschierenden Kunststoffilms überschreitenden Temperatur aufgeheizt wird, um mit dem Metallband verbunden werden zu können. Das dort beschriebene Verfahren ist auf spezielle Kunststoffmaterialien beschränkt und folglich nicht universell einsetzbar.

Weiterhin betrifft die US 5,865,931 A einen reflektierenden laminierten Streifen zur Verwendung als reflektierende Zierleiste für Fahrzeuge, welcher einen Streifen aus einer Aluminiumlegierung mit einer gereinigten und mit einem Haftvermittler versehenen äußeren Oberfläche umfasst. An die mit dem Haftvermittler beschichtete äußere Oberfläche des Metallsubstrats schließt sich eine Klebstofflage an, welche mit einer Polymerschicht verbunden ist. Eine äußere Seite der Polymerschicht ist mit einer reflektierenden Metallschicht versehen, welche vorzugsweise aus Edelstahl, Chrom oder Aluminium mit einer Dicke von weniger 5.000 Å besteht.

Die US 2002/0157777 A1 betrifft eine Autokarosserie mit einer äußeren Hülle, welche ein Muster an dem äußeren Oberflächenabschnitt aufweist und hergestellt wird durch Formen der äußeren Hülle mittels Schneiden, Formgeben und Zusammenführen einer Metallplatte, welche mit einer gemusterten Plastikfolie bedeckt ist und als Hauptaußenflächen der Karosserie verwendet wird, mit einem zuvor zusammengesetzten Hauptkörper, oder durch Formen einer äußeren Hülle durch Anpassen der Autoteile, welche hergestellt sind durch Schneiden, Formgeben und Zusammenführen einer Metallplatte, welche mit einer gemusterten Plastikfolie bedeckt ist, mit einem zuvor zusammengesetzten Hauptkörper.

Die US 4,407,689 A betrifft ein Verfahren zur Herstellung eines laminierten Gegenstands, welcher eine Metallfolie oder eine mit einem thermoplastischen Harz verstärkte Metallfolie und eine Folie aus einem thermoplastischen Harz beinhaltet, wobei das Verfahren folgende Schritte umfasst: Erhitzen der Metallfolie bzw. der verstärkten Metallfolie und der Folie aus dem thermoplastischen Harz mit mindestens einem Klebstoff, welcher zwischen diesen angeordnet ist, wobei der Klebstoff ausgewählt ist aus einem Carboxylgruppen enthaltenden Polyolefin und einem polyolefinbasierten Harz, welches durch Heißmischen eines Carboxylgruppen enthaltenden Polyolefins und einer Metallverbindung hergestellt worden ist, bei einer Temperatur, welche höher ist als die Schmelztemperatur des Klebstoffs, und unter Druckanwendung, um den laminierten Gegenstand herzustellen; und Kühlen des laminierten Gegenstands auf die Wärmeformbeständigkeitstemperatur des Klebstoffs oder auf eine Temperatur oberhalb der Wärmeformbeständigkeitstemperatur während ein Druck von mindestens 1 kg/cm² angewendet wird unter Verwendung einer Kühlrolle und einer nachgiebigen Walze derart, dass der laminierte Gegenstand zuerst mit der nachgiebigen Walze in Kontakt gebracht wird.

Weiterhin betrifft die EP 1 304 217 A2 ein Herstellungsverfahren für ein Halbzeug aus einem glänzenden Band zur Herstellung von geformten Produkten, insbesondere für kosmetische Anwendungen, wobei das Verfahren einen Schritt des Heißfügens einer Folie aus einem Material, ausgewählt aus Aluminium und Aluminiumlegierungen, und einer metallisierten Plastikfolie umfasst.

Die DE 39 29 942 A1 betrifft ein mit einer oder mehreren gegebenenfalls verschiedenen Harzschichten beschichtetes Metallblech, welches gekennzeichnet ist durch ring- oder scheibenförmige wulstartige Verdickungen mindestens einer der Harzschichten. Weiterhin betrifft die DE 39 29 942 A1 außerdem Verfahren zum Beschichtens von Metallblechen, die zur Beschichtung der Metallbleche eingesetzten thermoplastischen Verbundfolien sowie die Verwendung der beschichteten Metallbleche zur Herstellung von Verpackungsbehältern.

Schließlich betrifft die WO 03/084742 A1 zwei- oder mehrschichtige flexible Folienverbunde, bestehend aus einer oder mehreren Kunststofffolien und gegebenenfalls einer oder mehreren Metallfolien, wobei zumindest die dem zu verpackenden Gut zugewandte Folie eine Kunststofffolie ist, welche mittels eines von der Zusammensetzung der Folie abgeleiteten Kaschierklebemittels, das in Form einer Dispersion oder Lösung vorliegt, in einem Trockenkaschierverfahren mit einer oder mehreren Kunststoff- und/oder Metallfolien verbunden ist.

Der vorliegenden Erfindung liegt somit die Aufgabe zugrunde, ein Verfahren bereitzustellen, welches sich zum dauerhaften Verbinden von zumindest im wesentlichen flächigen Trägermaterialien mit Substraten, insbesondere zum Aufkaschieren von zumindest im wesentlichen flächigen Trägermaterialien auf Substrate, insbesondere Metallsubstrate, eignet und dabei insbesondere die zuvor geschilderten Nachteile des Standes der Technik zumindest weitgehend vermeidet oder aber wenigstens abschwächt.

Eine weitere Aufgabe der vorliegenden Erfindung ist die Bereitstellung eines Verfahrens zum Beschichten bzw. Kaschieren (Laminieren) von Substraten, insbesondere Metallsubstraten, insbesondere plattenförmigen Metallsubstraten, wie Metallblechen, Metalltafeln und dergleichen, mit insbesondere bahnförmigen flächigen Trägermaterialien, vorzugsweise für die Herstellung von Gegenständen aus beschichteten und/oder bedruckten Metallen, wobei ein solches Verfahren - im Vergleich zu den Verfahren des Standes der Technik - im hohen Maße investitions-, energie- und anwendungskostengünstiger sowie qualitäts- und leistungsfähiger und flexibler in der Anwendung sein, weitestgehend emissionsfrei arbeiten und damit umweltverträglich sein und auf diese Weise den Produzenten von Gegenständen insbesondere aus beschichteten Metallen neue innovative Gestaltungsmöglichkeiten für die Beschichtungen mit Kunststoffolien, aber auch anderen Materialien, wie z. B. Textilien, Papieren, Leder und dergleichen, ermöglichen soll.

Gegenstand der vorliegenden Erfindung ist somit - gemäß einem ersten Aspekt der vorliegenden Erfindung - ein Verfahren zur Herstellung eines mit einer Bedruckung oder einem Dekor versehenen Formgegenstands (Formkörpers), wobei
- in einem ersten Verfahrensschritt eine bedruckte oder mit einem Dekor versehene Kunststoffolie dauerhaft mit einem plattenförmigen Metallsubstrat verbunden wird, wobei zunächst die Kunststoffolie und/oder das plattenförmige Metallsubstrat mit einem lösemittelfreien Verbindungsmittel auf Basis eines Schmelzklebstoffs beaufschlagt wird bzw. werden und anschließend die Kunststoffolie auf das plattenförmige Metallsubstrat aufkaschiert wird, wobei die Auftragung des Verbindungsmittels mittels Düsen, Sprühvorrichtungen oder Rakeln vollflächig und homogen mit gleichmäßiger Schichtdicke erfolgt und wobei das Verbindungsmittel unter Erwärmen des Verbindungsmittels bei Temperaturen im Bereich von 90 bis 200 °C sowie in einer Menge von 0,1 bis 50 g/m² und mit einer Schichtdicke von 0,001 bis 1, mm aufgetragen wird, und
- in einem zweiten Verfahrensschritt das auf diese Weise erhaltene Verbundmaterial aus Kunststoffolie und plattenförmigem Metallsubstrat mittels in der Metallverarbeitung üblicher Formgebungsverfahren, ausgewählt aus Ziehverfahren und Prägen, umgeformt wird derart, daß ein mit einer Bedruckung oder einem Dekor versehener Formgegenstand resultiert.

Unter dem Begriff des Kaschierens - gelegentlich im Rahmen der vorliegenden Erfindung synonym auch als Laminieren bezeichnet - wird im Rahmen der vorliegenden Erfindung insbesondere das Verbinden von zwei oder mehreren Lagen (d. h. im Rahmen der vorliegenden Erfindung konkret das Verbinden von Trägermaterial mit Substrat) mit Hilfe eines geeigneten Verbindungsmittels - synonym auch als Kaschiermittel bezeichnet - verstanden, wobei als Kaschiermittel vorzugsweise geeignete Klebstoffe zum Einsatz kommen, wie nachfolgend noch beschrieben wird.

Für die Durchführung des erfindungsgemäßen Verfahrens, insbesondere bei kontinuierlichem und/oder automatisiertem Betrieb, ist es vorteilhaft, wenn die Kunststoffolie bahnförmig ausgebildet ist. Auf diese Weise kann es dann kontinuierlich mit dem zu beaufschlagenden Substrat zusammengeführt und verbunden bzw. kaschiert werden.

Mit dem erfindungsgemäßen Verfahren lassen sich nahezu beliebige Kunststoffolien der vorgenannten Art auf geeignete Substrate aufbringen bzw. aufkaschieren. Bevorzugterweise werden erfindungsgemäß bedruckte oder unbedruckte Kunststoffolien, so z. B. gestreckte oder ungestreckte Kunststoffolien, z. B. Verpackungsfolien (z. B. Polyolefinfolien, wie Polyethylen- oder Polypropylenfolien oder Polyester- und Poly(meth-)acrylatfolien)eingesetzt. Bei der Verwendung bedruckter bzw. dekorativer Kunststoffolien lassen sich auf diese Weise die Substrate, insbesondere Metallsubstrate, in einfacher Weise mit einem dekorativen Dekor versehen, ohne daß es einer Lackierung bedarf.

Was die erfindungsgemäß eingesetzten Substrate anbelangt, so kommen plattenförmige Metallsubstrate, wie Metallbleche, Metalltafeln und dergleichen. Die Substrate sind grundsätzlich von ihrer Dimensionierung her nicht begrenzt. Vorteilhafterweise werden Metallsubstrate, insbesondere Metallbleche oder Metalltafeln, mit Stärken bzw. Dicken von 0,01 bis 10 mm, insbesondere 0,05 bis 1,0 mm, eingesetzt.

Beispiele für geeignete plattenförmige Metallsubstrate, insbesondere Metallbleche oder Metalltafeln, sind beispielsweise Metallsubstrate aus Eisen, Stahl, Aluminium, Weißblech, insbesondere in verzinkter, verzinnter oder verchromter Ausführung, oder aus anderen Legierungen mit den entsprechenden Stärken und Abmessungen.

Vorzugsweise wird das erfindungsgemäße Verfahren derart durchgeführt, daß zunächst die Kunststoffolie mit dem Verbindungs- bzw. Kaschiermittel, vorzugsweise Klebstoff, beaufschlagt wird und nachfolgend die mit dem Verbindungs- bzw. Kaschiermittel, insbesondere Klebstoff, beaufschlagte Kunststoffolie mit dem Substrat zusammengeführt wird, so daß die Kunststoffolie dauerhaft und vollflächig mit dem Substrat verbunden wird. Es entsteht ein stabiler Verbund bzw. ein stabiles Laminat aus Kunststoffolie einerseits und Substrat andererseits, in dem die Kunststoffolie stabil und dauerhaft mit dem Substrat verbunden vorliegt.

Im allgemeinen wird das erfindungsgemäße Verfahren derart durchgeführt, daß das Zusammenführen von Kunststoffolie und Substrat nach Beaufschlagung von Kunststoffolie und/oder Substrat mit dem Verbindungs- bzw. Kaschiermittel (z. B. Klebstoff) unter Druck und/oder Anpressen erfolgt. Dies geschieht beispielsweise mittels Rollen, Walzen, Kalandern und dergleichen, vorzugsweise mit Kalandern.

Erfindungsgemäß erfolgt das Zusammenführen von Kunststoffolien und Substrat unter Erwärmen, insbesondere oberhalb des Schmelz- oder Erweichungsbereiches des Verbindungs- bzw. Kaschiermittels, insbesondere Klebstoffs. Gemäß einer besonders bevorzugten Ausführungsform wird dabei die Kunststoffolie zunächst mit einem geeigneten Schmelzklebstoff beaufschlagt und dann mit dem zu beschichtenden Metallsubstrat zusammengeführt. Dabei wird der Schmelzklebstoff üblicherweise vor und/oder während des Zusammenführens von Kunststoffolie und Substrat oberhalb seiner Schmelz- bzw. Erweichungstemperatur erhitzt, so daß eine sichere Klebeverbindung zwischen Kunststoffolie einerseits und Substrat andererseits gewährleistet ist.

Die Beaufschlagung bzw. Beschichtung des Substrats mit der Kunststoffolie kann ein- oder beidseitig erfolgen. So können beispielsweise beide Flächenseiten einer Metalltafel oder eines Metallbleches nach dem erfindungsgemäßen Verfahren mit der Kunststoffolie beaufschlagt werden, oder aber es kann auch nur eine dieser beiden Flächenseiten hiermit beaufschlagt werden, je nach gewünschter Verwendung.

Gemäß einer besonders bevorzugten Ausführungsform wird das erfindungsgemäße Verfahren kontinuierlich, insbesondere automatisiert, durchgeführt. Zu diesem Zweck werden die Kunststoffolie und das mit der Kunststoffolie zu beaufschlagende bzw. zu verbindende Substrat nach dem Klebstoffauftrag kontinuierlich zusammengeführt, üblicherweise mittels kontinuierlich bewegter Transportvorrichtungen, welche die Kunststoffolie einerseits und das Substrat andererseits kontinuierlich fortbewegen und kontinuierlich zusammenführen und verbinden bzw. kaschieren.

Die Beaufschlagung der Kunststoffolie und/oder des Substrats, vorzugsweise nur der Kunststoffolie, mit dem Verbindungs- bzw. Kaschiermittel erfolgt vollflächig und/oder homogen mit gleichmäßiger Schichtdicke. Auf diese Weise ist ein sicherer Verbund zwischen Kunststoffolie einerseits und Substrat andererseits, insbesondere auch verbunden mit guten optischen Eigenschaften, gewährleistet. Insbesondere gewährleistet der vollflächige und homogene Klebstoffauftrag eine ganzheitliche bzw. vollflächige, über alle Flächenbereiche gut und blasenfrei ausgebildete Verbindung zwischen Kunststoffolie einerseits und Substrat andererseits.

Zur Gewährleistung eines sicheren Verbunds zwischen Kunststoffolie einerseits und Substrats andererseits bei gleichzeitig guten Verarbeitungseigenschaften, wie optischen Eigenschaften etc., wird das Verbindungs- bzw. Kaschiermittel in einer Menge von 0,1 bis 50 g/m², vorzugsweise 0,5 bis 20 g/m², eingesetzt bzw. aufgetragen. Zu diesem Zweck werden, je nach Klebstoff, Schichtdicken des Klebstoffs von 0,001 bis 1 mm, vorzugsweise 0,001 bis 0,5 mm, besonders bevorzugt 0,005 bis 0,05 mm, aufgetragen. Wie zuvor beschrieben, erfolgt der Auftrag des Verbindungs- bzw. Kaschiermittels, insbesondere des Klebstoffs, erfindungsgemäß unter Erwärmen, üblicherweise unter Aufschmelzen, bei Temperaturen im Bereich von 90 bis 200 °C, insbesondere 100 bis 170 °C.

Der Auftrag des Verbindungsmittels erfolgt erfindungsgemäß mittels Düsen, Sprühvorrichtungen oder Rakeln. Vorzugsweise erfolgt der Klebstoffauftrag mittels Düsenauftrag, beispielsweise durch Schlitzdüsen. Dabei können sowohl Kontaktverfahren zum Einsatz kommen, bei denen die Düsenlippe mit dem mit Klebstoff zu beaufschlagenden Material in Kontakt steht, oder aber sogenannte Nichtkontaktverfahren, bei denen die Düsenlippe im allgemeinen etwa 1 bis 5 mm von dem mit Klebstoff zu beaufschlagenden Material beabstandet ist.

Als Verbindungs- bzw. Kaschiermittel wird ein lösemittelfreier Schmelzklebstoff eingesetzt. Hierbei handelt es sich insbesondere um bei Raumtemperatur feste, wasser- und lösemittelfreie Klebstoffe, welche auf die zu verklebenden Materialien aus der Schmelze aufgetragen werden und nach dem Zusammenfügen beim Abkühlen unter Verfestigung physikalisch und/oder chemisch abbinden.

Als erfindungsgemäß geeignete Schmelzklebstoffe können, je nach Anforderungen, insbesondere Schmelzklebstoffe in thermoplastischer oder reaktiver Qualität eingesetzt werden.

Die eingesetzten Schmelzklebstoffe werden insbesondere in Abhängigkeit von den zu verklebenden Materialien und den diesbezüglichen Anforderungen, beispielsweise einer geforderten Temperatur- bzw. Hitzebeständigkeit der Verklebung etc., ausgewählt.

Als thermoplastische Schmelzklebstoffe können insbesondere solche auf Basis von Ethylen/Vinylacetaten (EVA), Polyolefinen (z. B. amorphen Poly-α-olefinen oder metallocenkatalytisch hergestellten Polyolefinen), Polyacrylaten, Copolyamiden, Copolyestern und/oder thermoplastischen Polyurethanen bzw. entsprechenden Co- und/oder Terpolymeren eingesetzt werden.

Als reaktive, beispielsweise feuchtigkeitsvernetzende Schmelzklebstoffe kommen insbesondere solche auf Basis von silangepfropften amorphen Poly-α-olefinen, silangepfropften metallocenkatalytisch hergestellten Polyolefinen (vgl. EP 1 508 579 A1) oder isocyanatterminierten Polyurethanen zum Einsatz. Bei den reaktiven Schmelzklebstoffen führt die nachfolgende Vernetzung mit Feuchtigkeit zu temperatur- bzw. hitzebeständigen Verklebungen. Reaktive Schmelzklebstoffe kombinieren somit die Vorteile der schnellen Anfangsfestigkeit durch den physikalischen Abbindevorgang des Abkühlens mit einer nachfolgend stattfindenden chemischen Vernetzung. Bei der Verarbeitung feuchtigkeitsreaktiver Schmelzklebstoffe muß die Schmelze vor ihrer Applikation vor Feuchtigkeit geschützt werden.

Beispielsweise können für die Kaschierung von Metalltafeln oder Metallblechen mit OPP-Folien (= orientierte Polypropylenfolien) in rückseitig bedruckter oder unbedruckter Form in Kombination mit einer hohen Temperaturbeständigkeit des Verbunds Schmelzklebstoffe auf Basis von silangepfropften Polyolefinen verwendet werden.

Polymere für im Rahmen der vorliegenden Erfindung geeignete, reaktive feuchtigkeitsvernetzende Schmelzklebstoffe sind beispielsweise die im Handel unter der Produktbezeichnung "Vestoplast^{®} 206" von der Degussa AG, Marl, Deutschland, erhältlichen silanmodifizierten Poly-α-olefine. Erfindungsgemäß besonders bevorzugt sind silanmodifizierte Poly-α-olefine mit zahlenmittleren Molekulargewichten Mₙ von 5.000 bis 25.000 g/mol, vorzugsweise 10.000 bis 20.000 g/mol.

Weitere, erfindungsgemäß geeignete reaktive Schmelzklebstoffe umfassen beispielsweise strahlenvernetzende reaktive Schmelzklebstoffe (z. B. reaktive Schmelzklebstoffe, die unter UV-Bestrahlung vernetzen). Geeignete strahlenvernetzende Schmelzklebstoffe sind z. B. UV-vernetzbare Schmelzklebstoffe, insbesondere auf Basis von (Meth-)Acrylatpolymeren und -copolymeren oder acrylierten Polyestern und/oder Polyurethanen, vorzugsweise UV-vernetzbare Schmelzklebstoffe auf Basis von Acrylatcopolymeren, wie sie beispielsweise von der BASF AG, Ludwigshafen, unter der Bezeichnung "acResin®", z. B. "acResin^{®} A 203 UV", vertrieben werden. Im Falle UV-vernetzender Schmelzklebstoffe wird der eingesetzten Klebstoffmischung im allgemeinen ein Photoinitiator zugesetzt; dieser kann der Klebstoffmischung entweder als separater Photoinitiator zugesetzt sein oder aber Bestandteil des UVvernetzbaren Schmelzklebstoffs selbst sein, insbesondere in dem UV-reaktiven Polymer (z. B. UV-reaktives Acrylatcopolymer mit photoreaktiven Gruppen) enthalten sein (z. B. in Form von chemisch eingebauten photoreaktiven Gruppen, die an das UVreaktive Polymer gebunden sind, wie dies z. B. bei dem vorgenannten Produkt "acResin^{®} A 203 UV" der BASF AG, Ludwigshafen, der Fall ist). Durch die Bestrahlungs- bzw. Vernetzungsdauern, -intensitäten, -energien, -wellenlängen etc. lassen sich die Eigenschaften der Klebeverbindung gezielt steuern (z. B. Scherfestigkeiten etc.). Wie nachfolgend noch im Detail beschrieben, können zur Steuerung der offenen Zeit und/oder der Adhäsionseigenschaften der strahlenvernetzenden, insbesondere UV-vernetzenden reaktiven Schmelzklebstoffe Additive auf Basis nichtreaktiver Polymere, Harze und/oder Wachse zugesetzt sein, so z. B. gegebenenfalls hydrierte Kolophoniumharzester und aliphatische Kohlenwasserstoffharze. Eine erfindungsgemäß besonders geeignete Beispielrezeptur für ein UVvernetzendes reaktives Schmelzklebstoffsystem umfaßt z. B. 90 Gew.-% UV-reaktives Acrylsäureester-Copolymer (z. B. acResin^{®} A 203 UV der BASF AG) und 10 Gew.-% aliphatische Kohlenwasserstoffharze (z. B. Escorez^{®} 1310, Exxon Mobil).

Der Auftrag des Klebstoffs auf die Kunststoffolie und/oder das Substrat, vorzugsweise ausschließlich auf die Kunststoffolie, erfolgt wie zuvor beschrieben in Temperaturbereichen im Bereich von 90 °C bis 200 °C, vorzugsweise 100 °C bis 170°C.

Um eine gute Auftragbarkeit des Schmelzklebstoffs zu erreichen, werden üblicherweise solche Schmelzklebstoffe verwendet, welche bei den Verarbeitungstemperaturen, im allgemeinen 90 °C bis 200 °C, Brookfield-Viskositäten im Bereich von im allgemeinen 50 bis 1.000.000 mPa·s aufweisen.

Beispielsweise können in erfindungsgemäß bevorzugter Weise reaktive Schmelzklebstoffe auf Basis von silangepfropften Polyolefinen, insbesondere silangepfropften Poly-α-olefinen, eingesetzt werden, welche bei 180 °C Brookfield-Viskositäten im Bereich von 50 bis 50.000 mPa·s, insbesondere 1.000 bis 10.000 mPa.s, vorzugsweise 5.000 bis 8.000 mPa.s, besonders bevorzugt 5.500 bis 7.500 mPa.s, aufweisen.

Zur Steuerung der Reaktivität und des Vemetzungsverhaltens können den reaktiven Schmelzklebstoffen üblicherweise die für diese Zwecke an sich gängigen Katalysatoren zugesetzt sein, so z. B. Dibutylzinndilaurat (DBTL), und dies in den für diese Zwecke an sich üblichen Mengen. Beispiele für erfindungsgemäß geeignete Katalysatoren sind die in der Klebstoffchemie gängigen und bekannten Katalysatoren, wie beispielsweise organische Zinnverbindungen, wie das zuvor genannte Dibutylzinndilaurat (DBTL) oder aber Alkylmercaptidverbindungen des Dibutylzinns, oder aber organische Eisen-, Blei-, Cobalt-, Wismut-, Antimon- und Zinkverbindungen sowie Mischungen der zuvor genannten Verbindungen oder Katalysatoren auf Aminbasis, wie tertiäre Amine, 1,4-Diazabicyclo[2.2.2]octan und Dimorpholinodiethylether sowie deren Mischungen, Erfindungsgemäß besonders bevorzugt ist Dibutylzinndilaurat (DBTL), insbesondere in Kombination mit Klebstoffen auf Basis der vorgenannten reaktiven, vorzugsweise silanmodifizierten Poly-α-olefine. Die eingesetzten Mengen an Katalysator(en) können in weiten Bereichen variieren; insbesondere beträgt die eingesetzte Katalysatormenge 0,01 bis 5 Gew.-%, bezogen auf den Klebstoff. Zur Steuerung der Anwendungseigenschaften der Klebstoffe können diesen außerdem weitere Additive zugesetzt sein, wie beispielsweise Weichmacher, hochsiedende organische Öle oder Ester oder andere der Plastifizierung dienende Additive, Stabilisatoren, Antioxidantien, Säurefänger, Füllstoffe, Alterungsschutzmittel und dergleichen.

Zur Steuerung der offenen Zeit und/oder der Adhäsionseigenschaften der zuvor genannten Klebstoffe, insbesondere auch im Hinblick auf eine verbesserte Handhabbarkeit, können den vorgenannten Schmelzklebstoffen außerdem weitere Additive auf Basis nichtreaktiver Polymere, Harze und/oder Wachse zugesetzt sein. Auf diese Weise lassen sich die Klebstoffeigenschaften anwendungsbezogen einstellen und sozusagen maßschneidern.

Die Menge an nichtreaktiven Polymeren, Harzen und/oder Wachsen kann in weiten Bereichen variieren. Im allgemeinen liegt sie im Bereich von 1 Gew.-% bis 70 Gew.-%, insbesondere 5 Gew.-% bis 65 Gew.-%, vorzugsweise 10 Gew.-% bis 60 Gew.-%, bezogen auf den Klebstoff. Dennoch kann es anwendungsbedingt oder einzelfallabhängig erforderlich sein, von den vorgenannten Mengen abzuweichen.

Was die nichtreaktiven Polymere anbelangt, so können diese beispielsweise ausgewählt sein aus der Gruppe von (i) Ethylen/Vinylacetat-Copolymeren oder -Terpolymeren, insbesondere solchen mit Vinylacetat-Gehalten zwischen 12 und 40 Gew.-%, insbesondere 18 bis 28 Gew.-%, und/oder mit Schmelzindizes (MFIs, DIN 53735) von 8 bis 800, insbesondere 150 bis 500; (ii) Polyolefinen, wie unmodifizierten amorphen Poly-α-olefinen, insbesondere mit zahlenmittleren Molekulargewichten Mₙ von 5.000 bis 25.000 g/mol, vorzugsweise 10.000 bis 20.000 g/mol, und/oder mit Erweichungsbereichen nach Ring und Kugel zwischen 80 und 170 °C, vorzugsweise zwischen 80 und 130 °C, oder unmodifizierten metallocenkatalytisch hergestellten Polyolefinen (vgl. DE 103 23 617 A1); und (iii) (Meth-)acrylaten wie Styrol(meth)acrylaten sowie Mischungen dieser Verbindungen.

Was die nichtreaktiven Harze anbelangt, so können diese insbesondere ausgewählt sein aus der Gruppe von Kohlenwasserstoffharzen, insbesondere aliphatischen, cyclischen oder cycloaliphatischen Kohlenwasserstoffharzen, gegebenenfalls modifizierten Kolophoniumharzen (z. B. Kolophoniumharzestem), Terpenphenolharzen, Cumaron-Indenharzen, α-Methylstyrolharzen, polymerisierten Tallharzestern und/oder Ketonaldehydharzen.

Was die nichtreaktiven Wachse anbelangt, so können beispielsweise Polyolefinwachse, wie Polyethylen- und Polypropylenwachse, oder auf dieser Basis modifizierte Wachse eingesetzt werden.

Wie zuvor erläutert, eignet sich das erfindungsgemäße Verfahren insbesondere zur Kaschierung von Kunststoffolien auf Metallsubstraten mittels eines Schmelzklebstoffs als Kaschiermittel.

Nach der Aufbringen der Kunststoffolie auf das Metallsubstrat schließt sich im allgemeinen eine Konfektionierung (Dimensionierung bzw. Größenveränderung) und/oder Formgebung des auf diese Weise erzeugten Verbundmaterials an.

Was die Konfektionierung anbelangt, so erfolgt im Rahmen dieses Verfahrensschritt die Dimensionierung bzw. Größenveränderung des zuvor erzeugten Verbundmaterials aus Kunststoffolie und Substrat beispielsweise durch Zuschneiden und dergleichen.

Im Rahmen der Formgebung erfolgt dann die Formgestaltung des zuvor erzeugten Verbundmaterials aus Kunststoffolie und Substrat zu der gewünschten Anwendungsform. Die Formgebung kann mittels in der Metallverarbeitung üblicher Formgebungsverfahren erfolgen, ausgewählt aus Ziehverfahren, wie Tiefziehen, Ziehformen und Streckformen, und Prägen.

Eine grundlegende Besonderheit des erfindungsgemäßen Verfahrens muß darin gesehen werden, daß die Dimensionierung (Konfektionierung) und die Formgebung erst nach Erzeugung der Verbundmaterialien aus Kunststoffolie und Substrat, insbesondere kunststoffolienkaschierter Metallsubstrate, erfolgen. Dies führt zu einer enormen Qualitäts- und Leistungssteigerung sowie Flexibilität in der Anwendung, da zunächst ein universell einsetzbares Verbundmaterial erzeugt wird, welches erst in einem abschließenden Verfahrensschritt der Dimensionierung bzw. Konfektionierung und/oder der Formgebung seiner Endanwendung zugeführt wird.

Beispielsweise lassen sich nach dem erfindungsgemäßen Verfahren mit dekorativen Kunststoffolien beschichtete Metallgegenstände, beispielsweise Metallverpackungen, Metalldosen, Schraubverschlüsse für Gläser und Flaschen, Kronenkorken, technische Dosen, Lebensmittel- und Aerosoldosen, Zierleisten und dergleichen herstellen.

Das erfindungsgemäße Verfahren ist im hohen Maße investitions-, energie- und anwendungskostengünstig, platzsparend durchführbar sowie qualitäts- und leistungsstark und gleichermaßen flexibel in der Anwendung.

Aufgrund des Wegfalls des Erfordernisses von Lackierungen und dergleichen arbeitet das erfindungsgemäße Verfahren weitestgehend emissionsfrei und damit umweltverträglich. Es ermöglicht daher Produzenten von Gegenständen aus beschichteten Metallsubstraten neue innovative Gestaltungsmöglichkeiten für die Beschichtungen z. B. mit Kunststoffolien, Textilien, Papieren, Leder etc.

Im Vergleich zu aufwendigen Lackierungs- oder anderen Kaschierverfahren des Standes der Technik ermöglicht das erfindungsgemäße Verfahren eine Produktionsrealisierung mit einem einzigen Arbeitsschritt anstatt mehrerer separater Arbeitsgänge.

Mit dem erfindungsgemäßen Verfahren lassen sich beispielsweise auch lebensmittelgeeignete Metallverpackungen und Behälter mittels entsprechender Klebstoff- und Folienanwendung herstellen.

Das erfindungsgemäße Verfahren ermöglicht - aufgrund der einfachen Verwendung vielfacher Beschichtungsmaterialien, wie z. B. Kunststoffolien, Textilien, Papiere, Leder etc. - eine Vielzahl von Innovationsmöglichkeiten für die betreffenden Endprodukte.

Zudem lassen sich durch das erfindungsgemäße Verfahren die Kosten für die Herstellung der Metallsubstrate erheblich reduzieren, weil ein aufwendiger Korrosionsschutz mittels Verzinkung, Verzinnung, Verchromung und dergleichen entfällt, da die mittels Klebstoff und Kunststoffolie beaufschlagten Metallsubstrate bereits ausreichend vor Korrosion geschützt sind.

Das erfindungsgemäße Verfahren ist somit mit einer Vielzahl von Vorteilen verbunden.

Die nach dem erfindungsgemäßen Verfahren erhältlichen Produkte, d. h. Verbundmaterialien, weisen eine Kunststoffolie auf, wobei die Kunststoffolie mittels eines geeigneten Verbindungs- bzw. Kaschiermittels auf Basis eines Schmelzklebstoffs auf ein Metallsubstra aufkaschiert ist derart, daß die Kunststoffolie dauerhaft und vollflächig mit dem Substrat verbunden ist, insbesondere die Kunststoffolie auf das Metallsubstrat aufkaschiert ist.

Die nach dem erfindungsgemäßenVerfahren erhältlichen Produkte bzw. Verbundmaterialien werden abschließend einer Dimensionierung und/oder einer Formgebung, wie zuvor beschrieben, unterzogen. Mit dem erfindungsgemäßen Verfahren lassen sich somit geformte (d. h. dreidimensional geformte), insbesondere dimensionierte (d. h. beispielsweise zugeschnittene, gestanzte etc.) und dreidimensional geformte Produkte bzw. Verbundmaterialien der vorgenannten Art erzeugen.

Die mit dem erfindungsgemäßen Verfahren erhältlichen Produkte bzw. Verbundmaterialien lassen sich insbesondere zur Herstellung von Formgegenständen bzw. Formkörpern beliebiger Art (d. h. dreidimensional geformten Gegenständen bzw. Körpern mit nichtebenen Bereichen, insbesondere Erhebungen, Vertiefungen, Wölbungen, Ausbuchtungen, Knickstellen oder dergleichen), wie insbesondere Verpackungen, Behältnissen, Verschlüssen aller Art (z. B. Schraubverschlüssen für Gläser, Flaschen und dergleichen, Deckeln etc.), Kronenkorken, Dosen (z. B. technischen Dosen, Lebensmittel- und Aerosoldosen und dergleichen), Zierleisten etc. einsetzen.

Ausgehend von den mit dem erfindungsgemäßen Verfahren erhältlichen Produkten bzw. Verbundmaterialien lassen sich mittels Dimensionierung und Formgebung Formgegenstände (Formkörper) beliebiger Art, wie insbesondere Verpackungen, Behältnisse, Verschlüsse und Deckel aller Art (z. B. Schraubverschlüsse für Gläser, Flaschen und dergleichen), Kronenkorken, Dosen (z. B. technischen Dosen, Lebensmittel- und Aerosoldosen und dergleichen), Zierleisten etc, erhalten.

Die vorliegende Erfindung wird anhand des folgenden Ausführungsbeispiels veranschaulicht, welches die vorliegende Erfindung jedoch keinesfalls beschränkt.

### Ausführungsbeispiel:

Eine auf einer Seite farbig bedruckte, bahnförmige dekorative Kunststoffolie auf Basis einer orientierten Polypropylenfolie wird auf ihrer mit der Bedruckung versehenen Seite mittels einer Schlitzdüse vollflächig und mit gleichmäßiger Schichtdicke in einer Menge von ca. 5 g/m² mit einem Schmelzklebstoff beaufschlagt. Zu Zwecken des Auftrags wird der Schmelzklebstoff auf eine Temperatur von ca. 150 °C gebracht und mit dieser Temperatur auf die Kunststoffolie aufgetragen. Als Schmelzklebstoff wird ein Gemisch aus 49,9 Gew.- % Vestoplast^{®} 206 (Degussa AG, Schmelzklebstoff auf Basis silanfunktionalisierter nichtmodifizierter Poly-α-olefine), 40,0 Gew.-% Vestoplast^{®} 703 (Degussa AG, nichtmodifizierte amorphe Poly-α-polymere), 10,0 Gew.-% Escorez^{®} 5320 (Exxon Mobil, Kohlenwasserstoffharz) und 0,1 Gew.-% Katalysator (Dibutylzinndilaurat) verwendet.

Die auf diese Weise mit Klebstoff beaufschlagte bahnförmige Kunststoffolie wird anschließend mit einer bahnförmigen Metalltafel zusammengeführt. Das Zusammenführen folgt unter Druck bzw. Anpressen mittels eines beheizbaren Kalanders, so daß die Kunststoffolie mittels des Schmelzklebers auf die Metalltafel aufkaschiert und ein inniger Verbund von Kunststoffolie einerseits und Metallsubstrat andererseits erzeugt wird. Das mit der Kunststoffolie kaschierte Metallsubstrat wird nachfolgend abgekühlt und für die betreffende Anwendung zugeschnitten bzw. dimensioniert. Durch Tiefziehen erhält man schließlich Verschlüsse bzw. Deckel für Metallverpackungen, die mit einer dekorativen Kunststoffolie kaschiert sind.

Gegenüber herkömmlichen Lackierverfahren ist das erfindungsgemäße Verfahren wesentlich vereinfacht. Außerdem werden Lösemittelemissionen vermieden. Zudem wird die Bedruckung der Folie durch die innenseitige Anordnung in effizienter Weise geschützt.

## Patentansprüche

1. Verfahren zur Herstellung eines mit einer Bedruckung oder einem Dekor versehenen Formgegenstands (Formkörpers), wobei
- in einem ersten Verfahrensschritt eine bedruckte oder mit einem Dekor versehene Kunststoffolie dauerhaft mit einem plattenförmigen Metallsubstrat verbunden wird, wobei zunächst die Kunststoffolie und/oder das plattenförmige Metallsubstrat mit einem lösemittelfreien Verbindungsmittel, auf Basis eines Schmelzklebstoffs beaufschlagt wird bzw. werden und anschließend die Kunststoffolie auf das plattenförmige Metallsubstrat aufkaschiert wird, wobei die Auftragung des Verbindungsmittels mittels Düsen, Sprühvorrichtungen oder Rakeln vollflächig und homogen mit gleichmäßiger Schichtdicke erfolgt und wobei das Verbindungsmittel unter Erwärmen des Verbindungsmittels bei Temperaturen im Bereich von 90 bis 200 °C sowie in einer Menge von 0,1 bis 50 g/m² und mit einer Schichtdicke von 0,001 bis 1 mm aufgetragen wird, und
- in einem zweiten Verfahrensschritt das auf diese Weise erhaltene Verbundmaterial aus Kunststoffolie und plattenförmigem Metallsubstrat mittels in der Metallverarbeitung üblicher Formgebungsverfahrenausgewählt aus Ziehverfahren und Prägen, umgeformt wird derart, daß ein mit einer Bedruckung oder einem Dekor versehener Formgegenstand resultiert.

2. Verfahren nach Anspruch 1, **dadurch gekennzeichnet, daß** die Kunststoffolie bahnförmig ausgebildet ist und/oder daß das plattenförmige Metallsubstrat ein Metallblech oder eine Metalltafel ist, vorzugsweise mit einer Dicke von 0,01 bis 10 mm, insbesondere 0,05 bis 1,0 mm.

3. Verfahren nach Anspruch 1 oder 2, **dadurch gekennzeichnet, daß** die Kunststoffolie mit dem Verbindungsmittel beaufschlagt und anschließend die mit dem Verbindungsmittel beaufschlagte Kunststoffolie mit dem plattenförmigen Metallsubstrat zusammengeführt wird, so daß die Kunststoffolie dauerhaft und/oder vollflächig mit dem plattenförmigen Metallsubstrat verbunden wird, und/oder daß das Zusammenführen von Kunststoffolie und plattenförmigem Metallsubstrat unter Druck und/oder Anpressen erfolgt, insbesondere mittels Rollen, Walzen, Kalandern und dergleichen, und/oder daß das Zusammenführen von Kunststoffolie und plattenförmigem Metallsubstrat unter Erwärmen erfolgt, insbesondere oberhalb des Schmelz- oder Erweichungsbereiches des Verbindungsmittels, insbesondere Klebstoffs.

4. Verfahren nach einem oder mehreren der vorangehenden Ansprüche, **dadurch gekennzeichnet, daß** die Beaufschlagung des plattenförmigen Metallsubstrats mit der Kunststoffolie auf einer oder zwei Seiten des plattenförmigen Metallsubstrats erfolgt.

5. Verfahren nach einem oder mehreren der vorangehenden Ansprüche, **dadurch gekennzeichnet, daß** das Verfahren kontinuierlich und/oder automatisiert durchgeführt wird, insbesondere wobei die Kunststoffolie und das plattenförmige Metallsubstrat nach dem Klebstoffauftrag kontinuierlich zusammengeführt und miteinander verbunden werden, vorzugsweise mittels kontinuierlich bewegter Transportvorrichtungen.

6. Verfahren nach einem oder mehreren der vorangehenden Ansprüche, **dadurch gekennzeichnet, daß** das Verbindungsmittel in einer Menge von 0,5 bis 20 g/m², und/oder mit einer Schichtdicke von 0,001 bis 0,5 mm, besonders bevorzugt 0,005 bis 0,05 mm, aufgetragen wird und/oder daß das Verbindungsmittel unter Erwärmen, insbesondere unter Aufschmelzen des Verbindungsmittels bei Temperaturen im Bereich von 100 bis 170 °C aufgetragen wird.

7. Verfahren nach einem oder mehreren der vorangehenden Ansprüche, **dadurch gekennzeichnet, daß** der Auftrag des Verbindungsmittels mittels Schlitzdüsen erfolgt und/oder daß als Verbindungsmittel ein thermoplastischer oder reaktiver Schmelzklebstoff eingesetzt wird.

8. Verfahren nach einem oder mehreren der Ansprüche zur Herstellung von mit einer Bedruckung oder einem Dekor versehenen Verpackungen, Behältnissen, Dosen, Verschlüssen, Deckeln, Kronenkorken, Zierleisten und dergleichen.

9. Verfahren nach einem oder mehreren der vorangehenden Ansprüche, **dadurch gekennzeichnet, daß** als Kunststoffolie eine Polyolefinfolie, insbesondere Polyethylen- oder Polypropylenfolie, eine Polyesterfolie oder eine Poly(meth-)-acrylatfolie eingesetzt wird und/oder daß als Kunststoffolie eine gestreckte oder ungestreckte Kunststoffolie eingesetzt wird.

10. Verfahren nach einem oder mehreren der vorangehenden Ansprüche, **dadurch gekennzeichnet, daß** als Kunststoffolie eine orientierte Polypropylenfolie mit rückseitiger Bedruckung eingesetzt wird.

11. Verfahren nach einem oder mehreren der vorangehenden Ansprüche, **dadurch gekennzeichnet, daß** sich der Kaschierung der Kunststoffolie auf das plattenförmige Metallsubstrat zunächst eine Konfektionierung des auf diese Weise erzeugten Verbundmaterials anschließt, insbesondere wobei die Konfektionierung eine Größenveränderung (Dimensionierung) des erzeugten Verbundmaterials umfaßt, insbesondere ein Zuschneiden und dergleichen.

12. Verfahren nach einem oder mehreren der vorangehenden Ansprüche, **dadurch gekennzeichnet, daß** die Formgebung durch Tiefziehen, Ziehformen oder Streckformen erfolgt.

## Claims

1. A method for the production of a molded object (molded body) equipped with a printing or decoration, wherein
- in a first process step a printed plastic film, or one equipped with decoration, is permanently connected to a plate-shaped metal substrate, wherein initially the plastic film, and/or the plate-shaped metal is/are charged with a solution-free connecting means on a hot melt adhesive basis, and subsequently the plastic film is laminated onto the plate-shaped metal substrate, wherein the application of the connecting means is carried out by means of nozzles, spraying devices, or doctor blades, across the entire surface and homogenously at a uniform layer thickness, and wherein the connecting means is applied under heating of the connecting means at temperatures in the range of 90 to 200°C, and at an amount of 0.1 to 50 g/m², and at a layer thickness of 0.001 to 1 mm, and
- in a second process step the composite material obtained in this manner from plastic film and plate-shaped substrate, is remolded by means of shaping methods that are common in metal processing, selected from drawing and punching techniques, such that a molded object being equipped with a printing or decoration is the result.

2. The method according to claim 1, **characterized in that** the plastic film is embodied web-shaped, and/or the plate-shaped metal substrate is a sheet metal or a metal panel, preferably having a thickness of 0.01 to 10 mm, in particular 0.05 to 1.0 mm.

3. The method according to claims 1 or 2, **characterized in that** the plastic film is charged with the connecting means, and subsequently, the plastic film charged with the connecting means is combined with the plate-shaped metal substrate such that the plastic film is connected to the plate-shaped metal substrate permanently and/or across the entire surface thereof, and/or **in that** the combining of the plastic film and the plate-shaped metal substrate is carried out under pressure and/or by pressing on, in particular by means of rolling, shaping, calendaring, or the like, and/or that the combining of the plastic film and the plate-shaped metal substrate is carried out under heating, in particular above the melting or softening range of the connecting means, in particular an adhesive.

4. The method according to one or more of the previous claims, **characterized in that** the charging of the plate-shaped metal substrate with the plastic film is carried out on one or two sides of the plate-shaped metal substrate.

5. The method according to one or more of the previous claims, **characterized in that** the method is carried out continuously and/or automatically, in particular, wherein the plastic film and the plate-shaped metal substrate are continuously combined and connected to each other after the application of the adhesive, preferably by means of continuously moving transport devices.

6. The method according to one or more of the previous claims, **characterized in that** the connecting means is applied at an amount of 0.5 to 20 g/m², and/or at a layer thickness of 0.001 to 0.5 mm, particularly preferred at 0.005 to 0.05 mm, and/or that the connecting means is applied under heating, in particular under melting of the connecting means at temperatures in the range of 100 to 170°C.

7. The method according to one or more of the previous claims, **characterized in that** the application of the connecting means is carried out via slotted nozzles, and/or that a thermoplastic or reactive hot melt adhesive is used as the connecting means.

8. The method according to one or more of the previous claims for the production of packaging, containers, cans, closures, covers, crown corks, decorative molding, and the like, being equipped with a printing or decoration.

9. The method according to one or more of the previous claims, **characterized in that** a polyolefin film, in particular polyethylene or polypropylene film, a polyester film, or a poly(meth)acrylate film is utilized as the plastic film, and/or that a stretched or unstretched plastic film is utilized as the plastic film.

10. The method according to one or more of the previous claims, **characterized in that** an oriented polypropylene film having a printing on its back side, is utilized as the plastic film.

11. The method according to one or more of the previous claims, **characterized in that** subsequent to the laminating of the plastic film onto the plate-shaped metal substrate, initially the finishing of the composite material produced in this manner is carried out, in particular, the finishing comprising a change in sizes (dimensioning) of the composite material produced, in particular the cutting thereof, and the like.

12. The method according to one or more of the previous claims, **characterized in that** the shaping is carried out by means of deep drawing, pull forming, or stretch forming.

## Revendications

1. Procédé de fabrication d'un objet moulé (corps moulé) doté d'une impression ou d'un décor, dans lequel
- dans une première étape de procédé, on assemble à demeure un film imprimé ou doté d'un décor à un substrat métallique en forme de plaque, lors de quoi, tout d'abord, le film de plastique et/ou le substrat métallique en forme de plaque est/sont chargés d'un moyen d'assemblage sans solvant à base d'une colle fusible, et le film de plastique est ensuite contrecollé sur le substrat métallique en forme de plaque, l'application du moyen d'assemblage s'effectuant en pleine surface et de façon homogène au moyen de buses, de dispositifs de pulvérisation ou de racles, avec une épaisseur de couche uniforme, et le moyen d'assemblage étant appliqué moyennant réchauffage du moyen d'assemblage à des températures dans l'intervalle de 90 à 200 °C, ainsi qu'en une quantité de 0,1 à 50 g/m² et avec une épaisseur de couche de 0,001 à 1 mm, et
- dans une deuxième étape de procédé, on façonne le matériau composite obtenu de cette façon en le film de plastique et le substrat métallique en forme de plaque au moyen de procédés de formage habituels dans la transformation des métaux, choisis parmi les procédés d'emboutissage et le matriçage, de telle sorte qu'il en résulte un objet moulé doté d'une impression ou d'un décor.

2. Procédé selon la revendication 1, **caractérisé en ce que** le film de plastique est configuré en forme de bande et/ou **en ce que** le substrat métallique en forme de plaque est une tôle métallique ou une tablette métallique, de préférence avec une épaisseur de 0,01 à 10 mm, en particulier de 0,05 à 1,0 mm.

3. Procédé selon la revendication 1 ou 2, **caractérisé en ce que** le film de plastique est chargé du moyen d'assemblage et qu'ensuite le film de plastique chargé du moyen d'assemblage est réuni au substrat métallique en forme de plaque, de telle sorte que le film de plastique est assemblé en permanence et/ou en pleine surface avec le substrat métallique en forme de plaque, et/ou **en ce que** la réunion du film de plastique et du substrat métallique en forme de plaque s'effectue sous pression et/ou moyennant pressage, en particulier au moyen de roulettes, de rouleaux, de calandres et similaires, et/ou **en ce que** la réunion du film de plastique et du substrat métallique en forme de plaque s'effectue moyennant chauffage, en particulier au-dessus de la plage de fusion ou de ramollissement du moyen d'assemblage, en particulier de la colle.

4. Procédé selon une ou plusieurs des revendications précédentes, **caractérisé en ce que** la charge du substrat métallique en forme de plaque par le film de plastique s'effectue sur une ou deux faces du substrat métallique en forme de plaque.

5. Procédé selon une ou plusieurs des revendications précédentes, **caractérisé en ce que** le procédé est effectué en continu et/ou de façon automatisée, en particulier **en ce que** le film de plastique et le substrat métallique en forme de plaque sont réunis et assemblés en continu après l'application de la colle, de préférence au moyen de dispositifs de transport actionnés en continu.

6. Procédé selon une ou plusieurs des revendications précédentes, **caractérisé en ce que** le moyen d'assemblage est appliqué en une quantité de 0,5 à 20 g/m² et/ou avec une épaisseur de couche de 0,001 à 0,5 mm, de façon particulièrement préférée de 0,005 à 0,05 mm et/ou **en ce que** le moyen d'assemblage est appliqué moyennant chauffage, en particulier moyennant la fusion du moyen d'assemblage, à des températures dans l'intervalle de 100 à 170 °C.

7. Procédé selon une ou plusieurs des revendications précédentes, **caractérisé en ce que** l'application du moyen d'assemblage s'effectue au moyen de buses en fente et/ou **en ce que** comme moyen d'assemblage est utilisée une colle fusible thermoplastique ou réactive.

8. Procédé selon une ou plusieurs des revendications précédentes pour fabriquer des emballages, des récipients, des boîtes, des fermoirs, des couvercles, des capsules de bouteille, des baguettes décoratives et similaires, dotés d'une impression ou d'un décor.

9. Procédé selon une ou plusieurs des revendications précédentes, **caractérisé en ce que** comme film de plastique est utilisé un film de polyoléfine, en particulier un film de polyéthylène ou de polypropylène, un film de polyester ou un film de poly(méth-)acrylate, et/ou **en ce que** comme film de plastique est utilisé un film de plastique étiré ou non étiré.

10. Procédé selon une ou plusieurs des revendications précédentes, **caractérisé en ce que** comme film de plastique est utilisé un film de polypropylène orienté avec une impression au revers

11. Procédé selon une ou plusieurs des revendications précédentes, **caractérisé en ce qu'**une confection du matériau composite produit de cette façon fait suite d'abord au contre-collage du film de plastique sur le substrat métallique en forme de plaque, en particulier **en ce que** la confection comprend un changement de grandeur (dimensionnement) du matériau composite produit, en particulier un coupage aux dimensions ou similaire.

12. Procédé selon une ou plusieurs des revendications précédentes, **caractérisé en ce que** le formage s'effectue par emboutissage profond, par emboutissage ou par étirage.
